# EUROPEAN PATENT APPLICATION

(11) **EP 4 116 128 A1**
(43) Date of publication of application: **11.01.2023**
(21) Application number: 21764807.0
(22) Date of filing: 02.03.2021
(51) Int. Cl.: B60K 35/00, B60R 1/00, B60R 11/04, G03B 11/04, G03B 15/00, G03B 35/18, H04N 5/225, H04N 5/232, H04N 5/247, H04N 7/18, G02B 27/01, H04N 13/312, H04N 13/346, H04N 13/363, H04N 13/366

(54) **CAMERA APPARATUS, WINDSHIELD, AND IMAGE DISPLAY MODULE**

(30) Priority: 06.03.2020 JP 2020039326
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); TADAUCHI, Ryo, Kyoto-shi, Kyoto 612-8501 (JP); SHIMADA, Takashi, Kyoto-shi, Kyoto 612-8501 (JP)
(74) Representative: TBK
(86) International application number: PCT/JP2021/007992
(87) International publication number: WO 2021/177315

(57) **Abstract**

A camera apparatus includes a windshield and a camera. The camera captures an image of at least an eye of a driver of a movable body through the windshield.

## Description

### TECHNICAL FIELD

The present disclosure relates to a camera apparatus, a windshield, and an image display module.

### BACKGROUND OF INVENTION

A known technique is described in, for example, Patent Literature 1.

### CITATION LIST

### PATENT LITERATURE

Patent Literature 1: Japanese Unexamined Patent Application Publication No. 6-230132

### SUMMARY

In one embodiment of the present disclosure, a camera apparatus includes a windshield and a camera. The camera captures an image of at least an eye of a driver of a movable body through the windshield.

In one embodiment of the present disclosure, a windshield includes a light-reducing section along a perimeter of the windshield. The light-reducing section transmits less light. The light-reducing section includes a bottom area adjacent to a driver seat. The bottom area extends toward an inside of the windshield relative to another portion.

In one embodiment of the present disclosure, an image display module includes a display, a barrier, a housing, a mirror, and a camera. The display displays a parallax image to be projected to two eyes of a driver of a movable body through an optical system. The barrier defines a traveling direction of image light for the parallax image to cause parallax between the two eyes. The housing accommodates the display and the barrier. The mirror is inside the housing. The camera is inside the housing. The camera has an imaging direction toward a front of the movable body and captures an image of at least the two eyes through the mirror.

### BRIEF DESCRIPTION OF THE DRAWINGS

The objects, features, and advantages of the present disclosure will become more apparent from the following detailed description and the drawings.
FIG. 1 is a schematic diagram of an example movable body incorporating a camera apparatus.
FIG. 2 is a schematic diagram of an example windshield.
FIG. 3 is a schematic diagram of an example 3D (three-dimensional) projection system.
FIG. 4 is a schematic diagram describing the relationship between the eyes of a driver, a display, and a barrier.
FIG. 5 is a schematic diagram of another example windshield.
FIG. 6 is a schematic diagram of another example movable body incorporating a camera apparatus.
FIG. 7 is a schematic diagram of another example 3D projection system.

### DESCRIPTION OF EMBODIMENTS

A known image display apparatus that forms the basis of one or more embodiments of the present disclosure captures an image of a driver's face with a camera and displays an image in accordance with information about, for example, the driver's eyes or gaze direction.

A camera included in the known apparatus is installed at a position to allow the camera to capture an image of the driver's face.

An embodiment of the present disclosure will now be described in detail with reference to the drawings. The drawings used herein are schematic and are not drawn to scale relative to the actual size of each component.

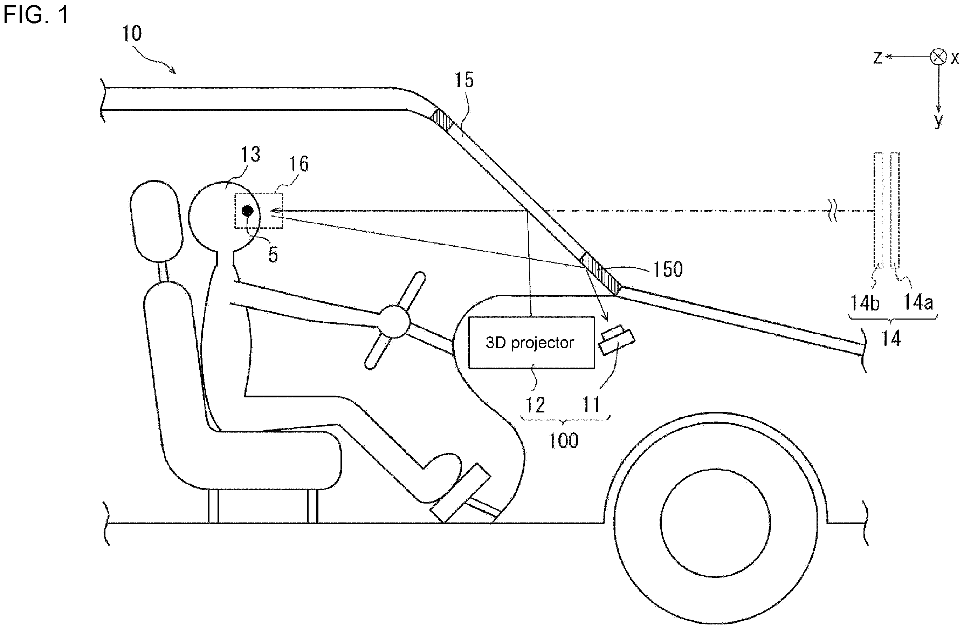

As illustrated in FIG. 1, a camera apparatus 50 according to one embodiment of the present disclosure is incorporated in a movable body 10. The camera apparatus 50 includes a camera 11 and a windshield 15. The movable body 10 may include a 3D (three-dimensional) projection system 100. The 3D projection system 100 includes the camera apparatus 50 and a 3D projector 12.

Examples of the movable body in the present disclosure include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle may include man-powered vehicles. The classification of the vehicle is not limited to the above examples. Examples of the automobile include an industrial vehicle travelling on a road. One type of vehicle may fall within multiple classes. Examples of the vessel include a jet ski, a boat, and a tanker. Examples of the aircraft include a fixed-wing aircraft and a rotary-wing aircraft.

In the example described below, the movable body 10 is a passenger vehicle. The movable body 10 may be any of the above examples instead of a passenger vehicle. The imaging direction of the camera 11 may be toward the front of the movable body 10. The camera 11 is attached to the movable body 10. The camera 11 captures an image of at least eyes 5 of a driver 13 of the movable body 10. The imaging direction is along the optical axis of the camera 11 and toward the subject. In other words, the imaging direction is along the optical axis of the camera 11 and opposite to incident light. The direction of movement of the movable body 10 may be toward either the front or the rear. In a passenger car, for example, the determination as to whether the direction is toward either the front or the rear may be determined based on, for example, the position of the steering wheel or the driver seat. The imaging direction of the camera 11 being toward the front of the movable body 10 refers to the imaging direction at least with a component in the same direction as toward the front of the movable body 10.

The windshield 15 may be located ahead in the imaging direction of the camera 11. The windshield 15 may reflect the face of the driver 13. The face of the driver 13 can fall within a predetermined range during driving. In this case, the camera 11 captures an image of an estimated area expected to include the driver's face through the windshield 15. The camera 11 captures an image of at least the face of the driver in the estimated area through the windshield 15. The camera 11 captures an image of at least the eyes 5 of the driver 13 of the movable body 10 through the windshield 15.

The camera 11 may be attached at any position inside or outside the movable body 10. For example, the camera 11 may be inside a dashboard in the movable body 10.

The camera 11 may be a visible light camera or an infrared camera. The camera 11 may function both as a visible light camera and an infrared camera. The camera 11 may include, for example, a CCD (charge-coupled device) image sensor or a CMOS (complementary metal-oxide semiconductor) image sensor.

The camera apparatus 50 may include, for example, a sensor. The sensor may be, for example, an ultrasonic sensor or an optical sensor. The camera 11 may detect the position of the head of the driver 13 with a sensor, and may detect the position of the eyes 5 of the driver 13 based on the position of the driver's head. The camera 11 may use two or more sensors to detect the positions of eyes 5 of the driver 13 as coordinates in 3D space.

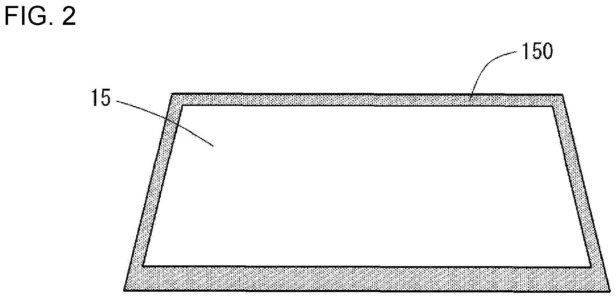

FIG. 2 is a schematic diagram of an example windshield 15. FIG. 2 illustrates the shape of the windshield 15 as viewed frontward from inside the movable body 10. The windshield 15 may include a light-reducing section 150 along its perimeter. The light-reducing section 150 may transmit external light at a predetermined transmittance (first transmittance) or lower. The first transmittance may be, for example, 0% or close to 0%. The portion of the windshield 15 excluding the light-reducing section 150 may have any transmittance at which the outside of the movable body 10 is visible toward the front during driving. The portion of the windshield 15 other than the light-reducing section 150 may transmit external light at a transmittance higher than a second transmittance. The second transmittance may be, for example, 100% or close to 100%. The second transmittance may be a transmittance for selected frequency bands. External light is, for example, sunlight. The external light may not be in all frequency bands, but may be in selected frequency bands. The second transmittivity may be, for example, close to 100% for visible light, and a lower value for infrared light, for example.

The light-reducing section 150 may be, for example, made of a light-reducing material to at least absorb or reflect external light. The light-reducing material may be, for example, a colored ceramic material, a ceramic material containing a coloring agent, or a paint containing a coloring agent. The light-reducing section 150 may be, for example, a strip of a light-reducing material on a surface of the windshield 15. The light-reducing section 150 may be, for example, a portion of the windshield 15 along its perimeter containing a light-reducing material.

The light-reducing section 150 in the windshield 15 is defined to include an estimated area expected to include the face of the driver 13. The camera 11 captures an image of the estimated area through the light-reducing section 150. The camera 11 captures an image of at least the eyes 5 of the driver 13 of the movable body 10 through the light-reducing section 150 in the windshield 15.

The camera apparatus 50 may detect the positions of the eyes 5 of the driver 13. The camera apparatus 50 may output positional information about the detected positions of the eyes 5 to the 3D projector 12. The 3D projector 12 may control an image to be projected based on this positional information. The camera apparatus 50 may output information indicating the positions of the eyes 5 to the 3D projector 12 with wires or wirelessly. The wires may include, for example, a CAN (controller area network).

The camera apparatus 50 may output a captured image to an external device. The external device may detect the positions of the eyes 5 of the driver 13 based on the output image. The external device may output positional information about the detected positions of the eyes 5 to the 3D projector 12. The 3D projector 12 may control an image to be projected based on this positional information. The camera apparatus 50 may output a captured image to an external device with wires or wirelessly. The external device may output a captured image to the 3D projector 12 with wires or wirelessly. The wires may include, for example, a CAN.

The 3D projector 12 may be at any position inside or outside the movable body 10. For example, the 3D projector 12 may be inside a dashboard in the movable body 10. The 3D projector 12 emits image light toward the windshield 15. The image light may be emitted, for example, through an opening in the housing 120.

The windshield 15 reflects image light emitted from the 3D projector 12. The image light reflected from the windshield 15 reaches an eye box 16. The eye box 16 is a region in a real space in which the eyes 5 of the driver 13 are expected to be based on, for example, the body shape, posture, and changes in the posture of the driver 13. The eye box 16 may have any shape. The eye box 16 may include a planar region or a 3D region. The solid arrow in FIG. 1 indicates a path traveled by at least a part of image light emitted from the 3D projector 12 to reach the eye box 16. The path traveled by image light is also referred to as an optical path. With the eyes 5 of the driver 13 located in the eye box 16 receiving image light, the driver 13 can view a virtual image 14. The virtual image 14 is on the dot-dash line extending frontward from the path extending from the windshield 15 to the eyes 5. The 3D projector 12 can function as a head-up display that enables the driver 13 to view the virtual image 14. In FIG. 1, the direction in which the eyes 5 of the driver13 are aligned corresponds to x-direction. The vertical direction corresponds to y-direction. The imaging range of the camera 11 includes the eye box 16.

As illustrated in FIG. 2, the 3D projector 12 includes a 3D display device 17 and an optical element 18. The 3D projector 12 may also be referred to as an image display module. The 3D display device 17 may include a backlight 19, a display 20 including a display surface 20a, a barrier 21, and a controller 24. The 3D display device 17 may further include a communicator 22. The 3D display device 17 may further include a storage 23. The 3D projector 12 may include, for example, a housing 120. The housing 120 accommodates the 3D display device 17 and the optical element 18.

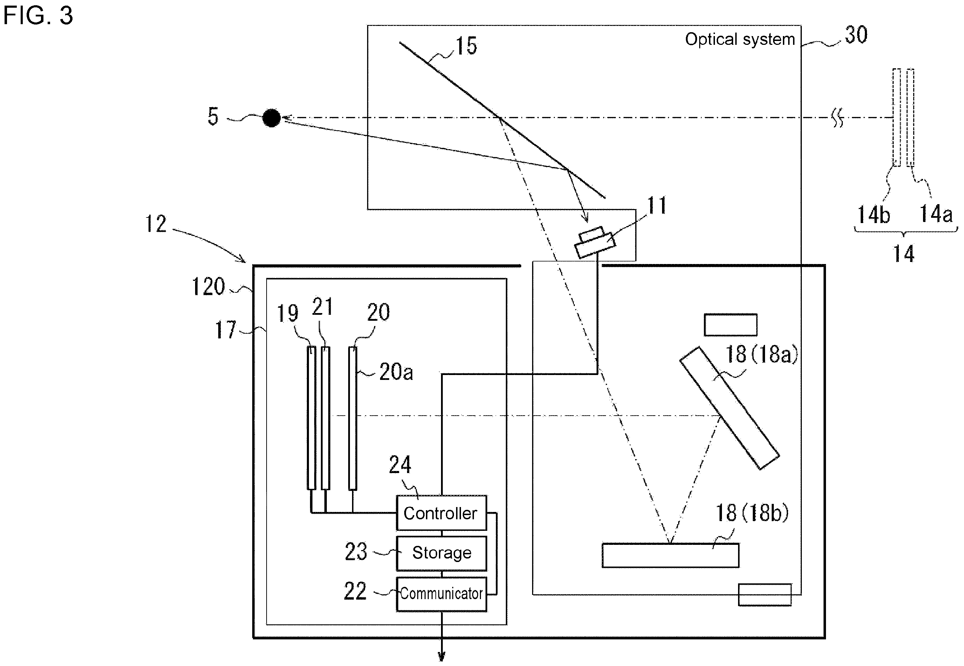

The optical element 18 may include a first mirror 18a and a second mirror 18b. At least either the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The dot-dash arrow in FIG. 3 indicates a path traveled by at least a part of image light emitted from the 3D display device 17 to be reflected from the first mirror 18a and the second mirror 18b and then exit the 3D projector 12. The image light emitted from the 3D projector 12 reaches the windshield 15, is reflected from the windshield 15, and then reaches the eyes 5 of the driver 13. This allows the driver 13 to view the image displayed by the 3D display device 17.

The optical element 18 and the windshield 15 allow image light emitted from the 3D display device 17 to reach the eyes 5 of the driver 13. The optical element 18 and the windshield 15 may form an optical system 30. In other words, the optical system 30 includes the optical element 18 and the windshield 15. The optical system 30 allows image light emitted from the 3D display device 17 to travel along the optical path indicated by the dot-dash line and reach the eyes 5 of the driver 13. The optical system 30 may control the traveling direction of image light to enlarge or reduce an image viewable by the driver 13. The optical system 30 may control the traveling direction of image light to deform an image viewable by the driver 13 based on a predetermined matrix.

The optical element 18 may have a structure different from the illustrated structure. The optical element 18 may include a concave mirror, a convex mirror, or a plane mirror. The concave mirror or the convex mirror may be at least partially spherical or aspherical. The optical element 18 may include one component or may include three or more components, instead of two components. The optical element 18 may include a lens instead of or in addition to a mirror. The lens may be a concave lens or a convex lens. The lens may be at least partially spherical or aspherical.

The backlight 19 is more away from the driver 13 than the display 20 and the barrier 21 on the optical path of image light. The backlight 19 emits light toward the barrier 21 and the display 20. At least a part of light emitted from the backlight 19 travels along the optical path indicated by the dot-dash line and reaches the eyes 5 of the driver 13. The backlight 19 may include an LED (light-emitting diode) or a light emitter such as an organic EL element or an inorganic EL element. The backlight 19 may have any structure that allows control of the light intensity and the light intensity distribution.

The display 20 includes a display panel. The display 20 may be, for example, a liquid crystal device such as an LCD (liquid crystal display). In the present embodiment, the display 20 includes a transmissive LCD panel. The display 20 is not limited to this example, and may include any of various display panels.

The display 20 includes multiple pixels and controls the transmittance of light from the backlight 19 incident on each pixel to emit image light that then reaches the eyes 5 of the driver 13. The driver 13 views an image formed by image light emitted from each pixel in the display 20.

The barrier 21 defines the traveling direction of incident light. With the barrier 21 closer to the backlight 19 than to the display 20, light emitted from the backlight 19 enters the barrier 21 and then enters the display 20. In this case, the barrier 21 blocks or attenuates a part of light emitted from the backlight 19 and transmits another part of the light to the display 20. The display 20 emits incident light traveling in a direction defined by the barrier 21 as image light traveling in the same direction. With the display 20 closer to the backlight 19 than to the barrier 21, light emitted from the backlight 19 enters the display 20 and then enters the barrier 21. In this case, the barrier 21 blocks or attenuates a part of image light emitted from the display 20 and transmits another part of the image light to the eyes 5 of the driver 13.

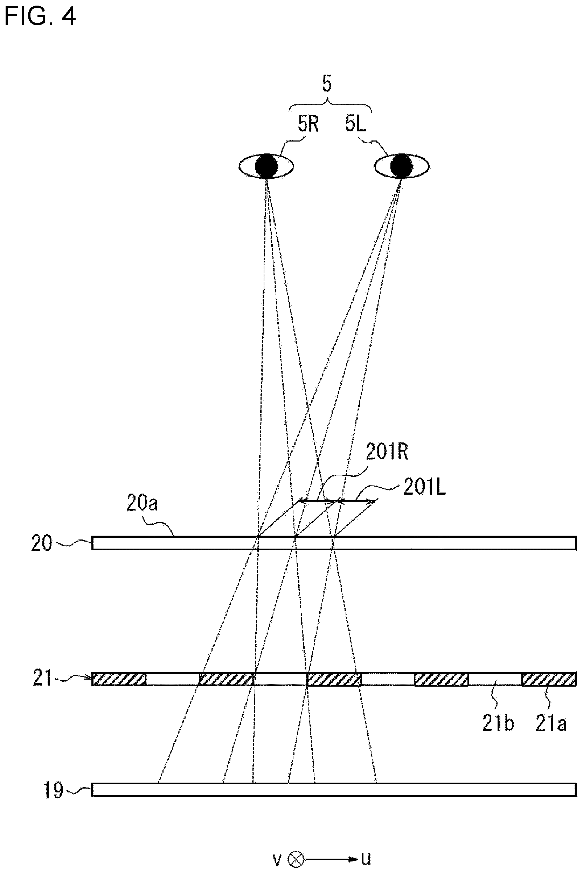

Irrespective of whether the display 20 or the barrier 21 is closer to the driver 13, the barrier 21 can control the traveling direction of image light. The barrier 21 allows a part of image light emitted from the display 20 to reach one of the left eye 5L and the right eye 5R (refer to FIG. 4) of the driver 13, and another part of the image light to reach the other of the left eye 5L and the right eye 5R of the driver 13. In other words, the barrier 21 directs at least a part of image light toward the left eye 5L of the driver 13 and toward the right eye 5R of the driver 13. The left eye 5L is also referred to as a first eye, and the right eye 5R as a second eye. In the present embodiment, the barrier 21 is located between the backlight 19 and the display 20. In other words, light emitted from the backlight 19 first enters the barrier 21 and then enters the display 20.

The barrier 21 defines the traveling direction of image light to allow each of the left eye 5L and the right eye 5R of the driver 13 to receive different image light. Each of the left eye 5L and the right eye 5R of the driver 13 can thus view a different image.

As illustrated in FIG. 4, the display 20 includes left-eye viewing areas 201L viewable by the left eye 5L of the driver 13 and right-eye viewing areas 201R viewable by the right eye 5R of the driver 13 on the display surface 20a. The display 20 displays a parallax image including left-eye images viewable by the left eye 5L of the driver 13 and right-eye images viewable by the right eye 5R of the driver 13. A parallax image refers to an image projected to the left eye 5L and the right eye 5R of the driver 13 to cause parallax between the two eyes of the driver 13. The display 20 displays left-eye images on the left-eye viewing areas 201L and right-eye images on the right-eye viewing areas 201R. In other words, the display 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 may further include a display area to display a planar image on the display surface 20a. The planar image causes no parallax between the eyes 5 of the driver 13 and is not viewed stereoscopically.

As illustrated in FIG. 4, the barrier 21 includes open areas 21b and light-blocking surfaces 21a. The barrier 21 located closer to the driver 13 than the display 20 is on the optical path of image light controls the transmittance of image light emitted from the display 20. The open areas 21b transmit light entering the barrier 21 from the display 20. The open areas 21b may transmit light with a transmittance of a first predetermined value or greater. The first predetermined value may be, for example, 100% or a value close to 100%. The light-blocking surfaces 21a block light entering the barrier 21 from the display 20. The light-blocking surfaces 21a may transmit light with a transmittance of a second predetermined value or less. The second predetermined value may be, for example, 0% or a value close to 0%. The first predetermined value is greater than the second predetermined value.

The open areas 21b and the light-blocking surfaces 21a are arranged alternately in u-direction indicating the parallax direction. The boundaries between the open areas 21b and the light-blocking surfaces 21a may extend in v-direction orthogonal to the parallax direction as illustrated in FIG. 4, or in a direction inclined with respect to v-direction at a predetermined angle. In other words, the open areas 21b and the light-blocking surfaces 21a may be arranged alternately in a predetermined direction including a component in the parallax direction.

In the present embodiment, the barrier 21 is more away from the driver 13 than the display 20 on the optical path of image light. The barrier 21 controls the transmittance of light directed from the backlight 19 to the display 20. The open areas 21b transmit light directed from the backlight 19 to the display 20. The light-blocking surfaces 21a block light directed from the backlight 19 to the display 20. This structure allows light entering the display 20 to travel in a predetermined direction. Thus, the barrier 21 can control a part of image light to reach the left eye 5L of the driver 13, and another part of the image light to reach the right eye 5R of the driver 13.

The barrier 21 may include a liquid crystal shutter. The liquid crystal shutter may control the transmittance of light in accordance with a voltage applied. The liquid crystal shutter may include multiple pixels and control the transmittance of light for each pixel. The liquid crystal shutter may form an area with high light transmittance or an area with low light transmittance in an intended shape. The open areas 21b in the barrier 21 including a liquid crystal shutter may have a transmittance of the first predetermined value or greater. The light-blocking surfaces 21a in the barrier 21 including a liquid crystal shutter may have a transmittance of the second predetermined value or less. The first predetermined value may be greater than the second predetermined value. The ratio of the second predetermined value to the first predetermined value may be set to 1/100 in one example. The ratio of the second predetermined value to the first predetermined value may be set to 1/1000 in another example. The barrier 21 including the open areas 21b and the light-blocking surfaces 21a that can shift is also referred to as an active barrier.

The controller 24 controls the display 20. The controller 24 may control the barrier 21 that is an active barrier. The controller 24 may control the backlight 19. The controller 24 obtains, from the camera 11, positional information about the positions of the eyes 5 of the driver 13, and controls the display 20 based on the positional information. The controller 24 may control at least one of the barrier 21 and the backlight 19 based on the positional information. The controller 24 may receive an image output from the camera 11 and detect the eyes 5 of the driver 13 based on the received image. The controller 24 may control the display 20 based on the detected positions of the eyes 5. The controller 24 may control at least one of the barrier 21 and the backlight 19 based on the detected positions of the eyes 5. The controller 24 may be, for example, a processor. The controller 24 may include one or more processors. The processors may include a general-purpose processor that reads a specific program to perform a specific function, and a processor dedicated to specific processing. The dedicated processor may include an ASIC (application-specific integrated circuit). The processors may include a PLD (programmable logic device). The PLD may include an FPGA (field-programmable gate array). The controller 24 may be either an SoC (system on a chip) or an SiP (system in a package) in which one or more processors cooperate with other components.

The communicator 22 may include an interface that can communicate with an external device. The external device may include, for example, the camera 11. The communicator 22 may obtain information from the camera 11 and output the information to the controller 24. The interface that can communicate in the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the USB standard, or a connector used for an RCA terminal. The electric connector may include a connector used for an S terminal specified by EIAJ CP-121aA or a connector used for a D terminal specified by EIAJ RC-5237. The electric connector may include a connector complying with the HDMI (registered trademark) standard or a connector used for a coaxial cable including a BNC (e.g., British Naval Connector or Baby-series N Connector). The optical connector may include a connector complying with IEC 61754. The wireless communication device may include a wireless communication device complying with the Bluetooth (registered trademark) standard and a wireless communication device complying with other standards including IEEE 8021a. The wireless communication device includes at least one antenna.

The storage 23 may store various information sets or programs for causing the components of the 3D display device 17 to operate. The storage 23 may include, for example, a semiconductor memory. The storage 23 may function as a work memory for the controller 24. The controller 24 may include the storage 23.

As illustrated in FIG. 4, light emitted from the backlight 19 passes through the barrier 21 and the display 20 to reach the eyes 5 of the driver 13. The broken lines indicate the paths traveled by light from the backlight 19 to reach the eyes 5. The light through the open areas 21b in the barrier 21 to reach the right eye 5R passes through the right-eye viewing areas 201R in the display 20. In other words, light through the open areas 21b allows the right eye 5R to view the right-eye viewing areas 201R. The light through the open areas 21b in the barrier 21 to reach the left eye 5L passes through the left-eye viewing areas 201L in the display 20. In other words, light through the open areas 21b allows the left eye 5L to view the left-eye viewing areas 201L.

The display 20 displays right-eye images on the right-eye viewing areas 201R and left-eye images on the left-eye viewing areas 201L. Thus, the barrier 21 allows image light for the left-eye images to reach the left eye 5L and image light for the right-eye images to reach the right eye 5R. More specifically, the open areas 21b allow image light for the left-eye images to reach the left eye 5L of the driver 13 and image light for the right-eye images to reach the right eye 5R of the driver 13. The 3D display device 17 with this structure can project a parallax image to the two eyes of the driver 13. The driver 13 views a parallax image with the left eye 5L and the right eye 5R to view the image stereoscopically.

Image light passing through the open areas 21b in the barrier 21 and emitted from the display surface 20a of the display 20 at least partially reaches the windshield 15 through the optical element 18. The image light is reflected from the windshield 15 and reaches the eyes 5 of the driver 13. This allows the eyes 5 of the driver 13 to view a first virtual image 14a located more away in the negative z-direction than the windshield 15. The first virtual image 14a corresponds to the image appearing on the display surface 20a. The open areas 21b and the light-blocking surfaces 21a in the barrier 21 form a second virtual image 14b in front of the windshield 15 and closer to the windshield 15 than the second virtual image 14b is. As illustrated in FIG. 3, the driver 13 can view an image with the display 20 appearing to be at the position of the first virtual image 14a and the barrier 21 appearing to be at the position of the second virtual image 14b.

The 3D display device 17 emits image light for the image appearing on the display surface 20a in a direction defined by the barrier 21. The optical element 18 directs the image light to the windshield 15. The optical element 18 may reflect or refract the image light. The windshield 15 reflects the image light to direct the light to the eyes 5 of the driver 13. The image light entering the eyes 5 of the driver 13 causes the driver 13 to view a parallax image as a virtual image 14. The driver 13 views the virtual image 14 stereoscopically. An image corresponding to the parallax image in the virtual image 14 is also referred to as a parallax virtual image. A parallax virtual image is a parallax image projected through the optical system 30. An image corresponding to the planar image in the virtual image 14 is also referred to as a planar virtual image. A planar virtual image is a planar image projected through the optical system 30.

The 3D projector 12 includes an optical system independent of the camera apparatus 50 and the windshield 15. An optical system for the camera apparatus 50, except the windshield 15, is independent of an optical system for projecting a parallax virtual image. The optical system independent of the 3D projector 12 except the windshield 15 allows the camera apparatus 50 to have a higher degree of flexibility.

The camera 11 captures an image of the driver's eyes by capturing an image of an area lower in the gravity direction (y-direction) than a reflective area on the windshield 15 in which a parallax virtual image in the optical system of the 3D projector 12 is reflected. The camera apparatus 50 can thus easily capture an image of the driver's eyes when, for example, the driver wearing a hat looks down.

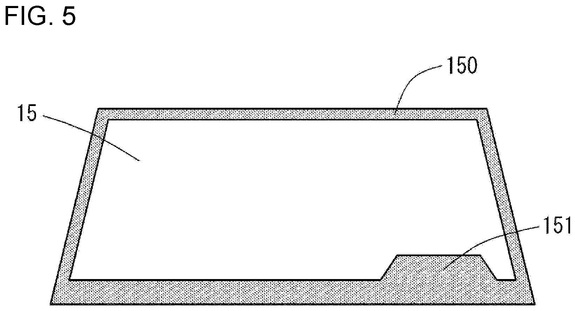

FIG. 5 is a schematic diagram of another example windshield 15. As illustrated in this example, the light-reducing section 150 in the windshield 15 may include a first portion 151 extending toward the inside of the windshield 15 relative to the other portions. The first portion 151 extending toward the inside is wider than other portions. The camera 11 captures light reflected from the first portion 151. The first portion 151 in the light-reducing section 150 is an estimated area expected to reflect the face of the driver 13 when viewed from the camera 11. The estimated area expected to reflect the face of the driver 13 varies depending on, for example, the body shape, posture, and changes in the posture of the driver 13. With the light-reducing section 150 including the first portion 151 wider than the other portions, the part of the reflected face including the eyes 5 is more likely to be located within the first portion 151 of the light-reducing section 150, despite such variations. The light-reducing section 150 including the first portion 151 allows the camera 11 to easily capture an image of the eyes 5 of the driver 13. The first portion 151 may be located in the bottom area adj acent to the driver seat to be more likely to reflect the eyes 5 of the driver 13. FIG. 5 illustrates an example of the first portion 151 located at the bottom right of the windshield 15, with the driver seat being on the right of the vehicle. For the driver seat on the left of the vehicle, the first portion 151 may be located at the bottom left of the windshield 15.

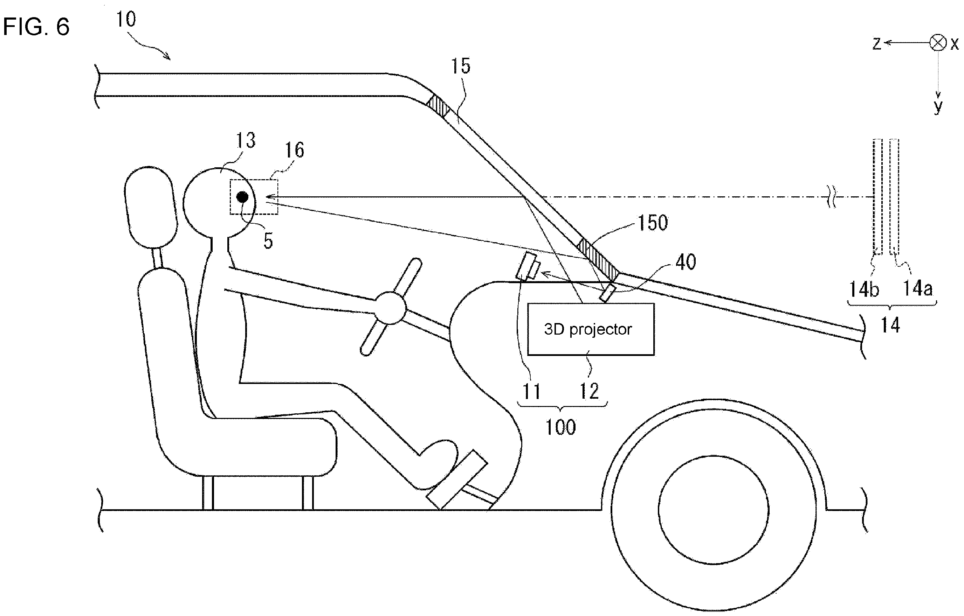

FIG. 6 is a schematic diagram of another example movable body 10 incorporating a camera apparatus 50. The camera apparatus 50 may further include, for example, a mirror 40. The mirror 40 is attached to reflect light reflected from a light-reducing section 150 of a windshield 15. A camera 11 attached with its imaging direction toward the front of the movable body 10 captures light reflected from the mirror 40. The camera 11 captures an image of at least eyes 5 of a driver 13 of the movable body 10 through the mirror 40 and the light-reducing section 150. The camera 11 may be attached at any position inside or outside the movable body 10. The mirror 40 may be attached at any position inside or outside the movable body 10. For example, the mirror 40 may be inside a dashboard in the movable body 10. The mirror 40 may be a concave mirror, a convex mirror, or a plane mirror.

The camera 11 captures an image of the eyes 5 of the driver 13 by capturing light reflected from the mirror 40. When the position of the mirror 40 is changed, the position of the camera 11 may be adjusted accordingly. When the position of the camera 11 is changed, the position of the mirror 40 may be adjusted accordingly. In other words, in the embodiment combining the camera 11 with the mirror 40, the camera 11 may be attached with its imaging direction toward the front of the movable body 10, further increasing the degree of flexibility in positioning.

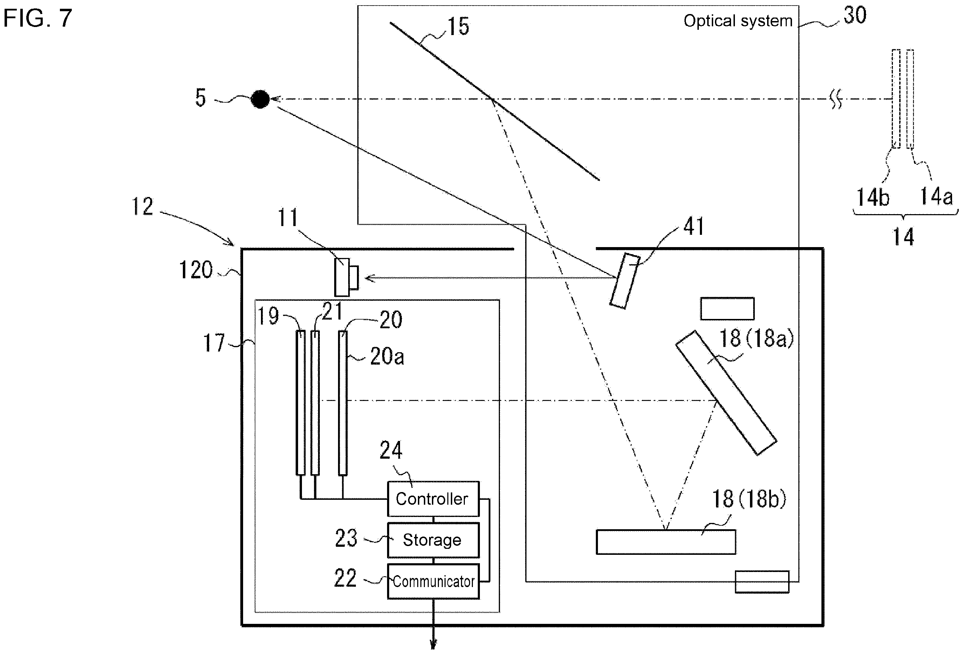

FIG. 7 is a schematic diagram of another example 3D projection system 100. As in the example illustrated in FIG. 2, a 3D projector 12 includes a 3D display device 17 and an optical element 18. The 3D display device 17 includes a backlight 19, a display 20, a barrier 21, and a controller 24. The 3D display device 17 may further include a communicator 22. The 3D display device 17 may further include a storage 23. The 3D projector 12 includes a housing 120. The housing 120 accommodates the 3D display device 17 and the optical element 18. The 3D projector 12 further includes the camera 11 and a mirror 41. The camera 11 and the mirror 41 are accommodated in the housing 120.

The mirror 41 is inside the housing 120 and reflects the face of the driver 13 through an opening in the housing 120. The opening in the housing 120 may be an opening to emit image light. The opening in the housing 120 may be an opening different from an opening to emit image light. The mirror 41 may be a concave mirror, a convex mirror, or a plane mirror.

The camera 11 is attached in the housing 120 with its imaging direction toward the front of a movable body. The camera 11 captures an image of at least the eyes 5 of the driver 13 through the mirror 41. The 3D projector 12 can control, based on information about the positions of the eyes 5 of the driver 13 detected by the camera 11, an image to be projected.

The camera 11 and the mirror 41 may be attached in the housing 120 at positions not to obstruct an optical path of image light. The camera 11 may be a visible light camera or an infrared camera. The camera 11 may function both as a visible light camera and an infrared camera. For the camera 11 that is an infrared camera, an infrared filter may be installed on an optical path from the camera 11 to the driver 13 through the mirror. The infrared filter blocks light in the visible light region and transmits light in the infrared region. The infrared filter may be a film or a plate. For example, the infrared filter may be located on the surface of the mirror 41. With the infrared filter blocking visible light, the driver 13 has lower visibility through the infrared filter on the optical path. In other words, the infrared filter can reduce the visibility of the camera 11. For the camera 11 that is an infrared camera, the camera 11 can capture infrared light transmitted through the infrared filter.

The structure according to the present disclosure is not limited to the structure described in the above embodiments, but may be changed or altered variously. For example, the functions of the components are reconfigurable unless any contradiction arises. Multiple components may be combined into a single unit or a single component may be divided into separate units.

The drawings used to describe the structures of one or more embodiments of the present disclosure are schematic and are not drawn to scale relative to the actual size of each component.

In the present disclosure, the first, the second, or others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller number identifiers.

In the present disclosure, x-direction, y-direction, and z-direction are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

The present disclosure may be implemented in the following forms.

In one embodiment of the present disclosure, a camera apparatus includes a windshield and a camera. The camera captures an image of at least an eye of a driver of a movable body through the windshield.

In one embodiment of the present disclosure, a windshield includes a light-reducing section along a perimeter of the windshield. The light-reducing section transmits less light. The light-reducing section includes a bottom area adjacent to a driver seat. The bottom area extends toward an inside of the windshield relative to another portion.

In one embodiment of the present disclosure, an image display module includes a display, a barrier, a housing, a mirror, and a camera. The display displays a parallax image to be projected to two eyes of a driver of a movable body through an optical system. The barrier defines a traveling direction of image light for the parallax image to cause parallax between the two eyes. The housing accommodates the display and the barrier. The mirror is inside the housing. The camera is inside the housing. The camera has an imaging direction toward a front of the movable body and captures an image of at least the two eyes through the mirror.

The camera apparatus, the windshield, and the image display module according to one embodiment of the present disclosure can have a higher degree of flexibility in positioning.

### REFERENCE SIGNS

- 5: eye (5L: left eye, 5R: right eye)
- 10: movable body
- 11: camera
- 12: 3D projector (image display module)
- 13: driver
- 14: virtual image (14a: first virtual image, 14b: second virtual image)
- 15: windshield
- 16: eye box
- 17: 3D display device
- 18: optical element (18a: first mirror, 18b: second mirror)
- 19: backlight
- 20: display (20a: display surface)
- 201L: left-eye viewing area
- 201R: right-eye viewing area
- 21: barrier (21a: light-blocking surface, 21b: open area)
- 22: communicator
- 23: storage
- 24: controller
- 30: optical system
- 40, 41: mirror
- 50: camera apparatus
- 100: 3D projection system

## Claims

1. A camera apparatus, comprising:
a windshield; and
a camera configured to capture an image of at least an eye of a driver of a movable body through the windshield.

2. The camera apparatus according to claim 1, wherein
the windshield includes a light-reducing section configured to transmit less light, and
the camera captures an image of at least an eye of the driver of the movable body through the light-reducing section.

3. The camera apparatus according to claim 2, wherein
the light-reducing section is located along a perimeter of the windshield and includes a first portion extending toward an inside of the windshield relative to another portion, and
the camera captures light reflected from the first portion.

4. The camera apparatus according to claim 2 or claim 3, further comprising:
a mirror configured to reflect light reflected from the light-reducing section,
wherein the camera captures an image of light reflected from the mirror.

5. The camera apparatus according to any one of claims 1 to 4, further comprising:
a controller configured to detect an eye of the driver based on an image output from the camera.

6. The camera apparatus according to any one of claims 1 to 5, wherein
the camera captures an image of an area lower in a gravity direction than a reflective area on the windshield in which a parallax virtual image to be projected to the driver of the movable body is reflected.

7. The camera apparatus according to any one of claims 1 to 6, wherein
an optical system for the camera, except the windshield, is independent of an optical system for projecting a parallax virtual image.

8. A windshield, comprising:
a light-reducing section along a perimeter of the windshield, the light-reducing section being configured to transmit less light,
wherein the light-reducing section includes a bottom area adjacent to a driver seat, and the bottom area extends toward an inside of the windshield relative to another portion.

9. An image display module, comprising:
a display configured to display a parallax image to be projected to two eyes of a driver of a movable body through an optical system;
a barrier defining a traveling direction of image light for the parallax image to cause parallax between the two eyes;
a housing accommodating the display and the barrier;
a mirror inside the housing; and
a camera inside the housing, the camera having an imaging direction toward a front of the movable body, the camera being configured to capture an image of at least the two eyes through the mirror.
